# EUROPEAN PATENT SPECIFICATION

(11) **EP 3 744 171 B1**
(45) Date of publication and mention of the grant of the patent: **16.02.2022**
(21) Application number: 20177253.0
(22) Date of filing: 28.05.2020
(51) Int. Cl.: A01K 1/00, F24F 12/00, F28D 21/00, F24D 5/02, F24H 3/08

(54) **AIR HEATING UNIT AND HOT AIR GENERATOR FOR USE IN SAID UNIT**
LUFTHEIZEINHEIT UND HEISSLUFTERZEUGER ZUR VERWENDUNG IN DIESER EINHEIT
UNITÉ DE CHAUFFAGE D'AIR ET GÉNÉRATEUR D'AIR CHAUD POUR UNE UTILISATION DANS LADITE UNITÉ

(30) Priority: 30.05.2019 ES 201930479
(43) Date of publication of application: 02.12.2020
(73) Proprietor: Kromschroeder, S.A., 08902 L'Hospitalet de Llobregat (ES)
(72) Inventor: VALERO URREA, Jose, 08902 L'Hospitalet de Llobregat (ES)
(74) Representative: Ponti & Partners, S.L.P

(56) References cited:
- GB-A- 2 220 475
- US-A- 5 123 595

## Description

The present invention relates to an air heating unit of the type used in premises normally used to breed and fatten animals which generates hot air to introduce it in the premises, expelling the combustion gases it produces to the outside.

The present invention also relates to a hot air generator modified for use in said heating system.

### Background of the invention

In climate control of animal breeding installations, heating units are known that are based on a hot air generator with sealed combustion. These generators expel the combustion exhaust gases, mainly carbon dioxide, out of the premises. In these installations meant to house animals and keep a comfortable temperature for their correct growth and fattening, the exhaust combustion gases of a heat generator must be expelled out of the premises to prevent the death of the animals due to carbon dioxide intoxication.

In installations with animals, the temperature and air quality inside the premises are essential in preventing mortality of animals which by their nature are very sensitive to changes in air temperature and quality, such as in poultry farms.

Great efforts have been made hitherto in the design of heating systems based on controlling the temperature inside the premises in order to keep it within a comfortable range for the animals, based on the air quality inside the premises, so that combustion exhaust gases have been considered more as a nuisance than a useful heat source.

Thus, heating units used in installations with animals have mainly relied on hot air generators with sealed combustion that do not emit the exhaust gases containing carbon dioxide into the premises to prevent contaminating the air inside these premises. Consequently, the heat of combustion in the generator is not used at this time, losing thermal energy that is emitted outside the premises of the poultry farm together with the exhaust gases from the generator combustion.

Although improved heating systems have been described, these are heating systems for drying materials in which air quality is independent of the desired temperature inside the premises. For example, international patent application WO201053278 describes the use of the heat generated in the combustion gases in a generator by introducing these gases in the premises of an installation used to dry products, and once these are dry the air in the installation is renewed with fresh air to allow an operator to access it. In this type of installations, not meant for breeding and fattening poultry, the combustion exhaust gases are directed into the premises as exceeding the allowed limits of carbon dioxide concentration for human or animal use is not a drawback for the drying process; however, the air must be renewed in a final step to allow access by an operator.

GB222047A discloses a ventilating system wherein a major heat source is a fuel-burning appliance producing combustion gases, comprising an air supply duct for supplying fresh air into the premises, an air exhaust duct for exhausting spent air from the premises, air propelling means for propelling air through said ducts, a vent for said combustion gases, and heat exchange means pneumatically linked to said ducts and to said vent for exchanging heat from the spent air and from the combustion gases to the fresh air.

Therefore, there is as yet no solution for the specific problem of heating in poultry farms, nor in general for installations for breeding and fattening animals, so that it is still desirable to provide a heating system for the premises of such installation that allows controlling the temperature and air quality inside the premises with an improved energy efficiency.

### Description of the invention

The air heating unit of the invention and the hot air generator included therein allows solving the aforementioned drawbacks, as well as providing additional advantages that are described below.

The first aspect of the present invention proposes an air heating unit for premises, preferably for an animal breeding installation, with improved energy efficiency.

The present invention relates to an air heating unit according to claim 1 used to condition the indoors environment of premises by heating air from outside the premises and introducing it into said premises, and/or heating the air from inside the premises and recirculating it again into the premises. This unit comprises at least a combustion hot air generator provided with an exchanger to heat said air flow.

According to the invention, the heating unit, as well as the hot air generator, comprise at least one heat recovery device, wherein said recovery device is provided with at least:
- an air inlet system into the heat recovery device from inside the premises;
- a duct or chamber for air from inside the premises that starts at the air inlet system and leads to a preheating exchanger;
- a preheating exchanger with an air circuit starting at the duct or chamber for air inlet in the inside of the premises which leads to the outside, which exchanges its thermal energy with an air circuit entering from the outside into the preheating exchanger, and where the air circuit from the outside leads to an air inlet system into the hot air generator for its subsequent inlet into the premises, wherein the inlet into the preheating exchanger, at least from the duct or chamber for air inlet from inside the premises, can be opened or closed selectively;

This configuration is also characterised in that between the heat recovery device and the hot air generator there is at least:
- a connection system for inlet of combustion gases from the hot air generator into the duct or chamber for air inlet from inside the premises, with selective opening and closing to allow or prevent the inlet of the gases generated by combustion into the duct or chamber;
- a connection system for recirculation of the air of inside the premises that passes from the duct or chamber for air inlet from inside the premises to the hot air generator, with selective opening or closing, for recirculation into the premises;

Finally, the invention is also characterised by the fact that the heating unit has control means that act, at least, on the hot air generator, on the air inlet systems and on the connection systems, allowing and/or regulating the air flow through these in an automatic and/or manual manner.

These features allow including in a heating unit the generation of hot air for climate control of a premises, together with the recovery of the heat provided by the air inside the premises that is extracted for renewal, as well as for the recovery of heat from the gases produced by combustion, in the same unit, under the same control system. This heating unit achieves a greater use of the heat energy of the fluids existing in the premises and in the heat generation itself, in an efficient manner without supplying combustion gases to the environment of the premises.

Preferably, in the present invention the passage of combustion gases through the duct or chamber for air inlet from inside the premises, takes place mixing with the air that enters from the premises to the recovery device to be ejected to the outside mixed together, after passing through the heat exchanger of the recovery device.

This configuration allows a greater contribution of heat energy to the air flow used to preheat the air flow that enters the recovery device from the outside, prior to generating the hot air.

For this advantageous configuration with a greater contribution of heat energy, optionally but preferably, the heat recovery device is provided in the duct or chamber for air inlet from inside the premises the internal deflectors for homogenising the gas mixture prior to the inlet to the heat recovery exchanger and its subsequent release to the outside.

With the installation of said deflectors it was possible to make an effective and homogeneous mix of the combustion gases with the air extracted from inside the premises, to preheat, also homogeneously, the air from the outside that passes through the recovery device.

Alternatively, a recovery device can be provided wherein the passage of the combustion gases through the duct or chamber for air inlet from inside the premises, takes place in a closed circuit without mixing with the air from inside the premises, in the form of a prior exchanger.

In this configuration option the heating unit heats the air arriving from inside the premises before it enters the exchanger in the recovery device, without mixing it with the combustion gases. The combustion gases circulate through a sealed circuit, without risk of being mixed or entering the premises, while losing part of the thermal energy in this previous exchanger.

Preferably, air inlet systems have extraction/impeller fans to supply the corresponding air flow in the heating unit. Accordingly, in a preferred embodiment of the invention, the heating unit only has two fans, a single fan for impelling air from the outside into the hot air generator through the exchanger of the recovery device, and a single fan for extracting air from inside the premises and introducing it in the recovery device.

This configuration allows saving one fan with respect to the conventional configuration in the separate use of recovery devices and hot air generators, with the resulting savings in material and electrical consumption associated in the present advantageous configuration.

In a preferred option of configuration of the present invention, the control means of the heating unit comprise a processing and control unit that receives information from ambient sensors inside and outside the premises to which the unit is connected, as well as from the parameters programmed in said unit and/or from remote external devices, automatically acting on the operation:
- of the air inlet system into the heat recovery device from inside the premises;
- of the air inlet system into the hot air generator, through the exchanger of the recovery device, for its subsequent introduction into the inside of the premises;
- of the hot air generator;
- of the selection opening or closing position of the connection system for inlet of combustion gases from the hot air generator to the duct or chamber for air inlet from inside the premises; and
- of the selective opening or closing position of the connection system for recirculation of the air in the premises, from the duct or chamber for air inlet to the hot air generator.

This allows automating the modes of operation, such as the air renewal mode with preheating of outside air in the recovery device and subsequent heating in the generator, or the heating in the generator of the air inside the premises in recirculation, or the renewal mode with only preheating of the outside air in the recovery device. Each of these modes requires activating, closing or opening the various aforementioned devices/systems.

Preferably, said control means act on the selective opening or closing position of the connection system for inlet of combustion gases from the hot air generator to the duct or chamber for air inlet from inside the premises, allowing passage of combustion gases into the duct or chamber, only if the air inlet system to the heat recovery device from inside the premises is activated and the selective position of the connection system for recirculation of air inside the premises from the duct or chamber for air inlet is closed to the hot air generator.

This configuration allows ensuring a correct operation from the point of view of preventing inlet of combustion gases into the premises, in the modes of operation in which combustion gases enter the duct or chamber of the recovery device.

Optionally, the hot air generator is connected to more than one heat recovery device and/or more than one premises to be conditioned. This allows servicing more than one recovery device or premises with a single hot air generator, thereby adapting to the various configurations of the installations in which it is located by routing the connections between the generator and the recovery device(s), as well as the inlets of external air and/or air inlets to the premises, according to the number of premises.

Preferably, in the present invention the heat recovery device comprises a cross-flow heat exchanger.

In a preferred embodiment of the invention the heating unit consists in a compact unit that incorporates under the same casing at least one hot air generator and one recovery device. The creation of the compact unit which allows to house and couple under the same casing/body a generator and a recovery device with the aforementioned features.

According to a second aspect of the invention, a combustion hot air generator according to claim 12 is provided of the type used in a heating unit as that described above, provided with a heat exchanger for heating, with the combustion gases and/or by flame, the air entering from outside the premises, to introduce same in the premises and/or to heat the air from inside the premises for recirculation again into the premises.

According to the invention, the hot air generator comprises, at least:
- an air inlet system from the outside into the hot air generator, for its subsequent inlet thereof into the premises, coupled to the circuit of the exchanger of the heat recovery device for air from the outside;
- an air outlet of the hot air generator into the premises;
- connection means for recirculation of air inside the premises that passes through the duct or chamber for air inlet from inside the premises to the hot air generator, with selective opening or closing, for recirculation into the premises;
- means for leading and directing combustion exhaust gases to the heat recovery device, in the connection system for inlet of combustion gases into the duct or chamber for air inlet from inside the premises, with selective opening or closing to allow or not passage of combustion gases into the duct or chamber.

Said hot air generator with this configuration allows having advantageous modes of operation, as described above, in operation coupled to a heat recovery device.

Optionally, the hot air generator has means for connection to two or more heat recovery devices and/or two or more premises.

### Brief description of the drawings

For the better understanding of the description made herein, a set of drawings has been provided wherein, schematically and solely by way of a non-limiting example, a practical case of an embodiment is portrayed.
Figure 1 is a schematic view of the air heating unit installed in premises for conditioning the temperature thereof.
Figure 2 is a schematic view of the air heating unit installed in premises for conditioning the temperature thereof, in an operation mode for preheating and subsequent heating of outside air.
Figure 3 is a schematic view of the air heating unit installed in premises for conditioning the temperature thereof, in an operation mode for heating inside air in recirculation, without renewal or preheating.
Figure 4 is a schematic view of the air heating unit installed in premises for conditioning the temperature thereof, in an operation mode with preheating of outside air.

### Description of a preferred embodiment

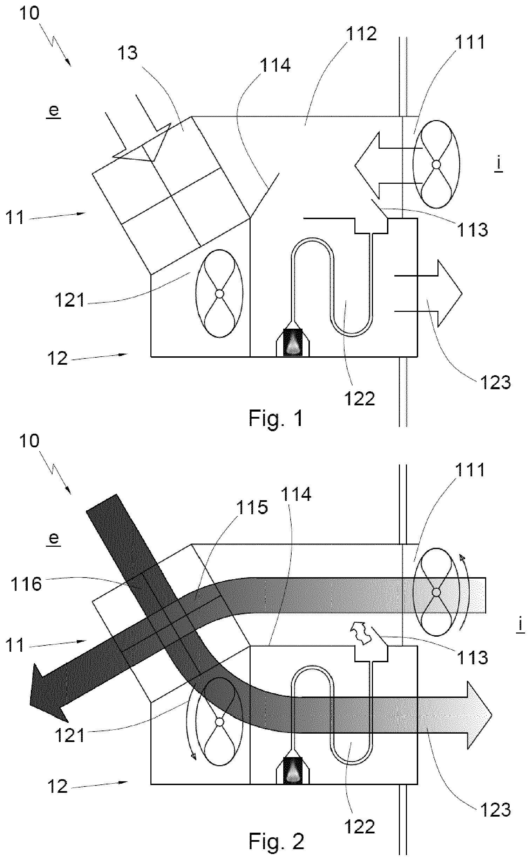

As shown in figure 1, the invention relates to an air heating unit (10) that is installed in an animal breeding installation in the outside (e) of premises, connected to the inside (i) of said premises to both extract ambient air and supply heated air.

The air heating unit (10) comprises in the present embodiment a hot air generator (12) and a recovery device (11), both under the same outer body or casing to form a compact assembly.

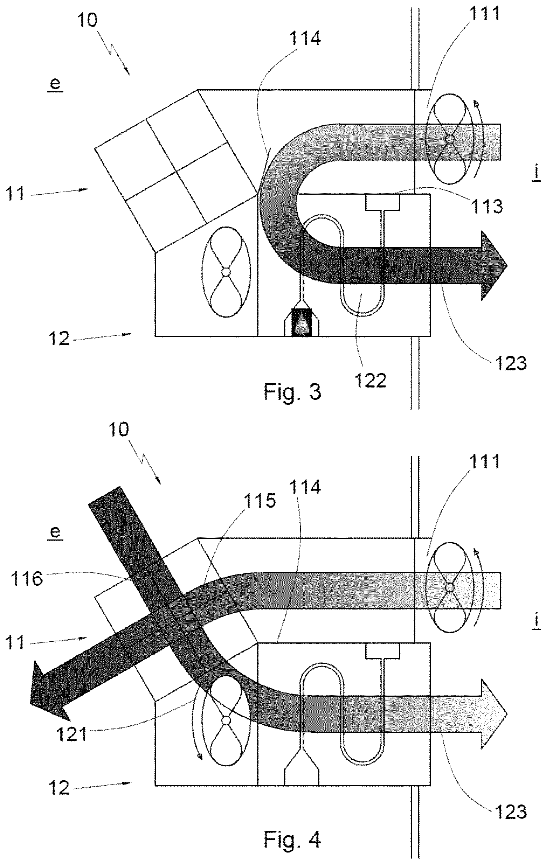

The heating unit (10) is connected to the inside (i) of the premises by an air inlet system (111) to the heat recovery device (11) from said inside (i) of the premises. In this embodiment, the air inlet (111) is established by a conduct with an extraction fan, which removes foul air from inside (i) the premises to introduce it in the duct or chamber (112) of the recovery device (11), where it can be led to the outside (e) through a cross-flow exchanger (13) for preheating outside air that enters, as is the case in the operation modes shown in figures 2 and 4, or instead recirculating the air through the hot air generator (12), wherein it is heated and then reintroduced in the premises (i), as in the operation mode shown in figure 3.

The path followed by the air removed from inside the premises (i) can be selected with a recirculation connection system (114) comprising a selector in the form of a gate that allows alternatively to lead air from the premises passing through the duct or chamber (112) to the preheating exchanger (13) and its subsequently eject it to the outside (e), or to the hot air generator (12) for recirculation into the premises (i).

The duct or chamber (112) of the recovery device (11) comprises a connection system for inlet of combustion gases (113) from the hot air generator (12), with selective opening or closing of the gate provided in the connection system in the present embodiment, thereby allowing or not passage of combustion gases into the duct or chamber (112) to mix them with the air extracted from inside the premises (i) and thereby increase the temperature of the mixture of gases, formed by foul air and said combustion gases. Alternatively, to mix the foul air from inside the premises (i) and the combustion gases there are deflectors in the duct or chamber (112) of the recovery device (11) in order to create the turbulence needed to mix the gases.

In this way, if said gas mixture is made, as shown in figure 2, it is led to the preheating exchanger (13) of the recovery device (11), increasing its thermal energy. In this operating mode the control system that governs in an automated manner the operation of the fans, the hot air generator (12) and the position of the various gates (113, 114), prevents gases from passing into the premises (i) so that the extraction fan of the air inlet (111) must be operating to prevent any combustion gases from entering the premises (i), and the gate of the recirculation connection system (114) must be closed preventing passage of combustion gas recirculation and forcing these to enter the circuit (115) of the exchanger (13), which subsequently expels to the outside (e) said mixture of gases that include combustion gases.

Alternatively and/or complementarily, there is an outlet of combustion gases to the area of the duct or chamber (112) of the recovery device (11), in a closed circuit, by way of an exchanger that does not allow direct contact and mixture of gases but instead merely performs a first heating of the air extracted from inside the premises (i). Although this is not as efficient for increasing the temperature of the gases made to pass through the exchanger (13) of the recovery device that preheats the air from the outside that enters the hot air generator (12), it does allow conducting preheating in recirculation mode.

In the operation modes in which air renewal is performed, as those shown in figures 2 and 4, the air extracted from inside the premises (i) through the inlet of fouled air into the recovery device (11) is led to the preheating exchanger (13) where, in a sealed manner, heat is exchanged with the air from the outside (e) that is introduced through said exchanger (13) to the hot air generator (12), arriving there preheated by the heat exchange with the fouled air, which can contain or not combustion gases from the generator (12) depending on whether the gate corresponding to the connection (113) from the generator (12) to the duct or chamber (112) of the recovery device (11) is open or closed.

As indicated, the preheating exchanger (13) comprises the circuit (115) arriving from the duct or chamber (112) of the recovery device (11) and the circuit (116) for air inlet from the outside (e), suctioned by the fan of the air inlet system (121) to the hot air generator (12).

After passing through the exchanger (13) the outside air passes through the hot air generator (12) wherein, if it is operating, heats the air before it enters the premises (i) by heat exchange with the heating chamber or exchanger (122) of the generator (12).

In the present embodiment the control means of the heating unit (10) are automated and comprise a processing and control unit that receives information from ambient sensors of the inside (i) and outside (e) of the premises to which it is connected, as well as the operation parameters programmed in said unit and/or from remote external devices, automatically acting on the operation of the air inlet system (111) to the heat recovery device (11) from inside the premises (i); of the air inlet system (121) to the hot air generator (12), through the exchanger of the recovery device, for its subsequent inlet in the premises (i); of the hot air generator (12); of the selector of the open or closed position for the connection system for inlet of combustion gases (113) from the hot air generator (12), to the duct or chamber (112) for air inlet from inside the premises (i); and of the selector of the open or closed position of the recirculation connection system (114) of the air in the premises (i) from the duct or chamber (112) for air inlet, to the hot air generator (12).

The control means preferably allow controlling the speed of two fans associated with the air inlets (111, 121) to the unit (10) to optimise the flow of fluids and heat exchange between them.

These control means govern said elements and devices in an automated manner to supply heated air into the premises (i), which can be
- recirculation of heated air from the inside premises (i) by:
   ∘ passing through the exchanger (122) of the hot air generator (12); and/or
   ∘ passing through the duct or chamber (112) of the recovery device (11) through an exchanger with combustion gases in a closed circuit.

- A supply of outside air (e) heated by:
   ∘ Preheating by passing through the exchanger (13) of the recovery device (11) with heat exchange with foul air, either only with said foul air or with this air mixed with combustion gases; and/or
   ∘ passing through the exchanger (122) of the hot air generator (12).

In the preferred embodiment, configured with a connection system for inlet of combustion gases (113) from the hot air generator (12) to the duct or chamber (112) for mixture with the air extracted from the premises (i), the control means act on the selective open or closed position of said connection system (113) for inlet of combustion gases from the hot air generator (12) to the duct or chamber (112), allowing passage of combustion gases into the duct or chamber (112),only when the air inlet system (111) to the heat recovery device (11) from inside (i) the premises is activated, and the selective position of the recirculation connection system (114) of the air inside the premises (i), from the duct or chamber (112) for air inlet to the hot air generator (12), is closed.

In alternative embodiments there can be two or more recovery devices (11) associated with a single generator, with the same connections between the generator (12) and the recovery device (11) between each other to provide the same operating features.

Similarly, also alternatively, the generator (12) can introduce heated air into two or more premises from a same generator (12).

A person skilled in the art will be aware of the constructive elements of a combustion generator, such as a burner, turbine, exchange chamber, combustion chamber, burner injectors, etc.

Although reference has been made to a specific embodiment of the invention, it is clear to a person skilled in the art that the heating unit and generator described are susceptible to numerous variations and modifications, such as the type of exchanger or the materials from which said exchangers are made, and that all the details mentioned can be replaced by other technically equivalent ones, without departing from the scope of protection defined by the attached claims.

## Claims

1. Air heating unit (10) to condition the inside environment or premises by heating air from outside the premises and leading it into said premises, and/or heating the air from inside the premises and taking it again into said premises, comprising at least one combustion hot-air generator (12) provided with an exchanger (122) for heating said air flow, wherein the heating unit (10), in addition to the hot air generator (12), has at least one heat recovery device (11), **characterized in that** said recovery device (11) has at least:
- an air inlet system (111) into the heat recovery device (11) from inside (i) the premises;
- a duct or chamber (112) for air inlet from inside (i) the premises that starts at the air inlet system (111) and leads to a preheating exchanger (13);
- a preheating exchanger (13) having an air circuit (115) starting at the duct or chamber (112) for air inlet from inside (i) the premises and which leads to the outside (e), which exchanges its thermal energy with a circuit (116) of air from the outside (e) into the preheating exchanger (13), and where the circuit of air from the outside (e) leads to an air inlet system (121) into the hot air generator (12) for its subsequent inlet into the premises, wherein the inlet into the exchanger, at least from the duct or chamber (112) for air inlet from inside (i) the premises can be opened or closed selectively;
wherein between the heat recovery device (11) and the hot air generator (12) there is at least:
- a connection system (113) for inlet of combustion gases from the hot air generator (12) into the duct or chamber (112) for air inlet from inside (i) the premises, with selective opening and closing to allow or prevent the passage of the gases generated by combustion into the duct or chamber (112);
- a connection system (114) for recirculation of air from inside the premises that passes from the duct or chamber (112) for air inlet from inside (i) the premises to the hot air generator (12), with selective opening or closing, for recirculation into the premises;
and wherein the heating unit (10) has control means that act, at least, on the hot air generator (12), on the air inlet systems (111, 121), and on the connection systems (113, 114), allowing and/or regulating the air flow through these in an automatic and/or manual manner.

2. Air heating unit according to claim 1, wherein the passage of the combustion gases through the duct or chamber (112) for air inlet from inside (i) the premises takes place mixing with the air from inside the premises (i) to be ejected to the outside mixed together, after passing through the heat exchanger (13) of the recovery device (11).

3. Air heating unit according to claim 2, wherein the heat recovery device (11) is provided in the duct or chamber (112) for air inlet from inside the premises (i) with internal deflectors for homogenising the gas mixture prior to the inlet to the exchanger (13) of the heat recovery device (11) and its subsequent release to the outside (e).

4. Air heating unit according to claim 1, wherein the passage of the combustion gases through the duct or chamber (112) for air inlet from inside (i) the premises takes place in a closed circuit without mixing with the air from inside (i) the premises, in the form of a prior exchanger.

5. Air heating unit according to claim 1, wherein the air inlet systems (111, 121) have extraction/impeller fans to supply the corresponding air flow to the heating unit (10).

6. Air heating unit according to claim 5, wherein the heating unit (10) only has two fans, a single fan for impelling air from the outside (e) into the hot air generator (12) through the exchanger (13) of the recovery device (11), and a single fan for extracting air from inside (i) the premises and introducing it in the recovery device (11).

7. Air heating unit according to claim 1, wherein the control means of the heating unit (10) comprise a processing and control unit that receives information from ambient sensors from inside (i) and outside (e) the premises to which the unit is connected, as well as from the operating parameters programmed in said unit and/or from remote external devices, automatically acting on the operation:
- of the air inlet system (111) into the heat recovery device (11) from inside (i) the premises;
- of the air inlet system (121) into the hot air generator (12), through the exchanger of the recovery device, for its subsequent introduction into the premises (i);
- of the hot air generator;
- of the selective open or closed position of the connection system (113) for inlet of combustion gases from the hot air generator (12) into the duct or chamber (112) for air inlet from inside the premises;
- of the selective open or closed position of the connection system (114) for recirculation of the air in the premises (i) from the duct or chamber (112) for air inlet to the hot air generator (12).

8. Air heating unit according to claim 1 or 7, wherein the control means act on the selective open or closed position of the connection system (113) for the inlet of combustion gases from the hot air generator (12) to the duct or chamber (112) for air inlet from inside the premises (i), allowing passage of combustion gases into the duct or chamber (112), only if the air inlet system (111) into the heat recovery device (11) from inside (i) the premises is activated, and the selective position of the connection system (114) for recirculation of air in the premises (i) from the duct or chamber (112) for air inlet into the hot air generator (12) is closed.

9. Air heating unit according to any of the preceding claims, wherein the hot air generator (12) is connected to more than one heat recovery device (11) and/or more than one premises to condition.

10. Air heating unit according to any of the preceding claims, wherein the heat recovery device (11) comprises a cross-flow heat exchanger (13).

11. Air heating unit according to any of the preceding claims, wherein the heating unit (10) consists in a compact unit that incorporates under the same casing at least one hot air generator (12) and one recovery device (11).

12. Combustion hot air generator of the type used in air heating units as that described in claims 1 to 11, provided with an exchanger (122) to heat air from outside (e) the premises in order to introduce it inside (i) the premises, and/or to heat air from inside (i) the premises in order to recirculate it again inside (i) the premises, wherein the hot air generator (12) comprises at least:
- an air inlet system (121) from the outside (e) into the hot air generator (12) for its subsequent inlet to the inside (i) of the premises, suitable to be coupled to the air circuit (116) of the exchanger (13) of the heat recovery device (11) of air arriving from the outside (e);
- an air outlet from the hot air generator (12) into the inside (i) of the premises; **characterized in that** the hot air generator (12) comprises:
- means (114) for connecting the recirculation of air from inside the premises that passes from the duct or chamber (112) for air inlet from inside (i) the premises to the hot air generator (12), with selective opening or closing, for recirculation into the inside (i) of the premises;
- means for leading and directing combustion exhaust gases toward the heat recovery device (11) via the connection system (113) for inlet of combustion gases into the duct or chamber (112) for air inlet from inside (i) the premises, with selective opening or closing to allow or not passage of combustion gases into the duct or chamber (112).

13. Hot air generator according to claim 12, wherein the hot air generator (12) has means for connection to two or more heat recovery devices (11) and/or to two or more premises.

## Patentansprüche

1. Lufterwärmungseinheit (10), um die innere Umgebung oder Räumlichkeiten durch Erwärmen von Luft von außerhalb der Räumlichkeiten und das Führen dieser in die Räumlichkeiten und/oder Erwärmen der Luft aus dem Inneren der Räumlichkeiten und erneutes Einlassen dieser in die Räumlichkeiten zu konditionieren, umfassend wenigstens einen Verbrennungs-Heißluftgenerator (12),
der mit einem Austauscher (122) versehen ist, zum Erwärmen der Luftströmung, wobei die Erwärmungseinheit (10) zusätzlich zu dem Heißluftgenerator (12) wenigstens eine Wärmerückgewinnungsvorrichtung (11) aufweist, **dadurch gekennzeichnet, dass** die Rückgewinnungsvorrichtung (11) wenigstens aufweist:
- ein Lufteinlasssystem (111) in die Wärmerückgewinnungsvorrichtung (11) aus dem Inneren (i) der Räumlichkeiten;
- einen Kanal oder eine Kammer (112) für den Lufteinlass aus dem Inneren (i) der Räumlichkeiten, der bzw. die an dem Lufteinlasssystem (111) beginnt und zu einem Vorerwärmungs-Austauscher (13) führt;
- einen Vorerwärmungs-Austauscher (13), der einen Luftkreislauf (115) aufweist, der an dem Kanal oder der Kammer (112) für den Lufteinlass aus dem Inneren (i) der Räumlichkeiten beginnt und der zur Außenseite (e) führt, der seine Wärmeenergie mit einem Kreislauf (116) von Luft von der Außenseite (e) in den Vorerwärmungs-Austauscher (13) austauscht, und wobei der Kreislauf von Luft von der Außenseite (e) zu einem Lufteinlasssystem (121) in den Heißluftgenerator (12) für deren anschließenden Einlass in die Räumlichkeiten führt, wobei der Einlass in den Austauscher wenigstens von dem Kanal oder der Kammer (112) für den Lufteinlass aus dem Inneren (i) der Räumlichkeiten selektiv geöffnet oder geschlossen werden kann;
wobei zwischen der Wärmerückgewinnungsvorrichtung (11) und dem Heißluftgenerator (12) wenigstens vorhanden ist:
- ein Verbindungssystem (113) für den Einlass von Verbrennungsgasen von dem Heißluftgenerator (12) in den Kanal oder die Kammer (112) für den Einlass von Luft aus dem Inneren (i) der Räumlichkeiten mit selektivem Öffnen und Schließen, um den Durchgang der durch die Verbrennung erzeugten Gase in den Kanal oder die Kammer (112) zu ermöglichen oder zu verhindern;
- ein Verbindungssystem (114) für die Rückführung von Luft aus dem Inneren der Räumlichkeiten, das von dem Kanal oder der Kammer (112) für den Lufteinlass aus dem Inneren (i) der Räumlichkeiten zu dem Heißluftgenerator (12) hindurchgeht, mit selektivem Öffnen oder Schließen für die Rückführung in die Räumlichkeiten;
und wobei die Erwärmungseinheit (10) Steuermittel aufweist, die wenigstens auf den Heißluftgenerator (12), auf die Lufteinlasssysteme (111, 121) und auf die Verbindungssysteme (113, 114) wirken, die die Luftströmung durch diese in einer automatischen und/oder manuellen Weise ermöglichen und/oder regeln.

2. Lufterwärmungseinheit nach Anspruch 1, wobei beim Durchgang der Verbrennungsgase durch den Kanal oder die Kammer (112) für den Lufteinlass aus dem Inneren (i) der Räumlichkeiten eine Mischung mit der Luft aus dem Inneren der Räumlichkeiten (i) stattfindet, so dass sie nach dem Durchgang durch den Wärmetauscher (13) der Rückgewinnungsvorrichtung (11) miteinander vermischt zur Außenseite ausgestoßen werden.

3. Lufterwärmungseinheit nach Anspruch 2, wobei die Wärmerückgewinnungsvorrichtung (11) in dem Kanal oder der Kammer (112) für den Lufteinlass aus dem Inneren der Räumlichkeiten (i) mit inneren Deflektoren zum Homogenisieren der Gasmischung vor dem Einlass in den Austauscher (13) der Wärmerückgewinnungsvorrichtung (11) und für ihre anschließende Freisetzung zur Außenseite (e) versehen ist.

4. Lufterwärmungseinheit nach Anspruch 1, wobei der Durchgang der Verbrennungsgase durch den Kanal oder die Kammer (112) für den Lufteinlass aus dem Inneren (i) der Räumlichkeiten in einem geschlossenen Kreislauf ohne das Mischen mit der Luft aus dem Inneren (i) der Räumlichkeiten in der Form eines vorausgehenden Austauschers stattfindet.

5. Lufterwärmungseinheit nach Anspruch 1, wobei die Lufteinlasssysteme (111, 121) Absaug-/Laufradgebläse aufweisen, um die entsprechende Luftströmung der Erwärmungseinheit (10) zuzuführen.

6. Lufterwärmungseinheit nach Anspruch 5, wobei die Erwärmungseinheit (10) nur zwei Gebläse aufweist, ein einziges Gebläse zum Treiben von Luft von der Außenseite (e) durch den Austauscher (13) der Rückgewinnungsvorrichtung (11) in den Heißluftgenerator (12) und ein einziges Gebläse zum Extrahieren von Luft aus dem Inneren (i) der Räumlichkeiten und zum Einleiten dieser in die Rückgewinnungsvorrichtung (11).

7. Lufterwärmungseinheit nach Anspruch 1, wobei die Steuermittel der Erwärmungseinheit (10) eine Verarbeitungs- und Steuereinheit umfassen, die Informationen sowohl von Umgebungssensoren aus dem Inneren (i) und dem Äußeren (e) der Räumlichkeiten, mit denen die Einheit verbunden ist, als auch von den in die Einheit programmierten Betriebsparametern und/oder von den entfernten äußeren Vorrichtungen empfängt und die automatisch auf den Betrieb wirkt:
- des Lufteinlasssystems (111) in die Wärmerückgewinnungsvorrichtung (11) aus dem Inneren (i) der Räumlichkeiten;
- des Lufteinlasssystems (121) durch den Austauscher der Rückgewinnungsvorrichtung in den Heißluftgenerator (12) für seine anschließende Einleitung in die Räumlichkeiten (i);
- des Heißluftgenerators;
- der selektiv offenen oder geschlossenen Position des Verbindungssystems (113) für den Einlass der Verbrennungsgase von dem Heißluftgenerator (12) in den Kanal oder die Kammer (112) für den Lufteinlass aus dem Inneren der Räumlichkeiten;
- der selektiv offenen oder geschlossenen Position des Verbindungssystems (114) für die Rückführung der Luft in den Räumlichkeiten (i) von dem Kanal oder der Kammer (112) für den Lufteinlass in den Heißluftgenerator (12).

8. Lufterwärmungseinheit nach Anspruch 1 oder 7, wobei die Steuermittel auf die selektiv offene oder geschlossene Position des Verbindungssystems (113) für den Einlass der Verbrennungsgase von dem Heißluftgenerator (12) in den Kanal oder die Kammer (112) für den Lufteinlass aus dem Inneren der Räumlichkeiten (i) wirken, wobei sie den Durchgang der Verbrennungsgase in den Kanal oder die Kammer (112) nur dann ermöglichen, falls das Lufteinlasssystem (111) in die Wärmerückgewinnungsvorrichtung (11) aus dem Inneren (i) der Räumlichkeiten aktiviert ist und die selektive Position des Verbindungssystems (114) für die Rückführung von Luft in den Räumlichkeiten (i) von dem Kanal oder der Kammer (112) für den Lufteinlass in den Heißluftgenerator (12) geschlossen ist.

9. Lufterwärmungseinheit nach einem der vorhergehenden Ansprüche, wobei der Heißluftgenerator (12) mit mehr als einer Wärmerückgewinnungsvorrichtung (11) und/oder mehr als einer zu konditionierenden Räumlichkeit verbunden ist.

10. Lufterwärmungseinheit nach einem der vorhergehenden Ansprüche, wobei die Wärmerückgewinnungsvorrichtung (11) einen Kreuzstromwärmetauscher (13) umfasst.

11. Lufterwärmungseinheit nach einem der vorhergehenden Ansprüche, wobei die Erwärmungseinheit (11) aus einer kompakten Einheit besteht, die unter demselben Gehäuse wenigstens einen Heißluftgenerator (12) und eine Rückgewinnungsvorrichtung (11) umfasst.

12. Verbrennungs-Heißluftgenerator des Typs, der in den Lufterwärmungseinheiten nach den Ansprüchen 1 bis 11 verwendet wird, der mit einem Wärmetauscher (122) versehen ist, um die Luft von der Außenseite (e) der Räumlichkeiten zu erwärmen, um diese in das Innere (i) der Räumlichkeiten einzuleiten, und/oder um Luft aus dem Inneren (i) der Räumlichkeiten zu erwärmen, um diese erneut in das Innere (i) der Räumlichkeiten zurückzuführen, wobei der Heißluftgenerator (12) wenigstens umfasst:
- ein Lufteinlasssystem (121) von der Außenseite (e) in den Heißluftgenerator (12) für deren anschließenden Einlass in das Innere (i) der Räumlichkeiten, das geeignet ist, um an den Luftkreislauf (116) des Austauschers (13) der Wärmerückgewinnungsvorrichtung (11) der von der Außenseite (e) ankommenden Luft gekoppelt zu sein;
- einen Luftauslass aus dem Heißluftgenerator (12) in das Innere (i) der Räumlichkeiten;
**dadurch gekennzeichnet, dass** der Heißluftgenerator (12) umfasst:
- Mittel (114) zum Verbinden der Rückführung von Luft aus dem Inneren der Räumlichkeiten, die von dem Kanal oder der Kammer (112) für den Lufteinlass aus dem Inneren (i) der Räumlichkeiten zu dem Heißluftgenerator (12) hindurchgehen, mit selektivem Öffnen oder Schließen zur Rückführung in das Innere (i) der Räumlichkeiten;
- Mittel zum Führen und Leiten der Verbrennungsabgase in Richtung der Wärmerückgewinnungsvorrichtung über das Verbindungsystem (113) für den Einlass von Verbrennungsgasen in den Kanal oder die Kammer (112) für den Lufteinlass aus dem Inneren (i) der Räumlichkeiten, mit selektivem Öffnen oder Schließen, um den Durchgang von Verbrennungsgasen in den Kanal oder die Kammer (112) zu ermöglichen oder nicht.

13. Heißluftgenerator nach Anspruch 12, wobei der Heißluftgenerator (12) Mittel für die Verbindung mit zwei oder mehr Wärmerückgewinnungsvorrichtungen (11) und/oder zwei oder mehr Räumlichkeiten aufweist.

## Revendications

1. Unité de chauffage d'air (10) destinée à climatiser un environnement intérieur ou des locaux en chauffant de l'air provenant de l'extérieur des locaux et en l'amenant dans lesdits locaux, et/ou en chauffant de l'air provenant de l'intérieur des locaux et en le ramenant dans lesdits locaux, comprenant au moins un générateur d'air chaud à combustion (12) pourvu d'un échangeur (122) destiné à chauffer le flux d'air, dans laquelle l'unité de chauffage (10), en plus du générateur d'air chaud (12), comporte au moins un dispositif de récupération de chaleur (11), **caractérisée en ce que** ledit dispositif de récupération (11) comprend au moins :
- un système d'entrée d'air (111) dans le dispositif de récupération de chaleur (11) depuis l'intérieur (i) des locaux ;
- un conduit ou une chambre (112) d'entrée d'air depuis l'intérieur (i) des locaux, qui part du système d'entrée d'air (111) et conduit à un échangeur de préchauffage (13) ;
- un échangeur de préchauffage (13) comprenant un circuit d'air (115) qui part du conduit ou de la chambre (112) d'entrée d'air depuis l'intérieur (i) des locaux et qui mène à l'extérieur (e), qui échange son énergie thermique avec un circuit (116) d'air provenant de l'extérieur (e) vers l'échangeur de préchauffage (13), et dans lequel le circuit d'air provenant de l'extérieur (e) conduit à un système d'entrée d'air (121) dans le générateur d'air chaud (12) pour son entrée ultérieure dans les locaux, dans lequel l'entrée dans l'échangeur, au moins à partir du conduit ou de la chambre (112) d'entrée d'air depuis l'intérieur (i) des locaux, peut être ouverte ou fermée sélectivement ;
dans laquelle, entre le dispositif de récupération de chaleur (11) et le générateur d'air chaud (12), est au moins prévu :
- un système de connexion (113) pour l'entrée de gaz de combustion provenant du générateur d'air chaud (12) dans le conduit ou la chambre (112) d'entrée d'air depuis l'intérieur (i) des locaux, avec une ouverture et une fermeture sélectives pour permettre ou empêcher le passage des gaz générés par la combustion dans le conduit ou la chambre (112) ;
- un système de connexion (114) pour la recirculation de l'air provenant de l'intérieur des locaux qui passe du conduit ou de la chambre (112) d'entrée d'air depuis l'intérieur (i) des locaux au générateur d'air chaud (12), avec ouverture ou fermeture sélective, pour la recirculation dans les locaux ;
et dans laquelle l'unité de chauffage (10) comprend des moyens de commande qui agissent au moins sur le générateur d'air chaud (12), sur les systèmes d'entrée d'air (111, 121), et sur les systèmes de connexion (113, 114), laissant passer et/ou régulant le flux d'air à travers ceux-ci de manière automatique et/ou manuelle.

2. Unité de chauffage d'air selon la revendication 1, dans laquelle le passage des gaz de combustion à travers le conduit ou la chambre (112) d'entrée d'air depuis l'intérieur (i) des locaux s'effectue en mélangeant ceux-ci avec l'air provenant de l'intérieur des locaux (i) à rejeter à l'extérieur, après passage dans l'échangeur de chaleur (13) du dispositif de récupération (11).

3. Unité de chauffage d'air selon la revendication 2, dans laquelle le dispositif de récupération de chaleur (11) est prévu dans le conduit ou la chambre (112) d'entrée d'air depuis l'intérieur des locaux (i) avec des déflecteurs internes pour homogénéiser le mélange gazeux avant l'entrée dans l'échangeur (13) du dispositif de récupération de chaleur (11) et son rejet ultérieur à l'extérieur (e).

4. Unité de chauffage de l'air selon la revendication 1, dans laquelle le passage des gaz de combustion à travers le conduit ou la chambre (112) d'entrée d'air depuis l'intérieur (i) des locaux s'effectue en circuit fermé sans mélange avec l'air provenant de l'intérieur (i) des locaux, sous la forme d'un échangeur préalable.

5. Unité de chauffage d'air selon la revendication 1, dans laquelle les systèmes d'entrée d'air (111, 121) comportent des ventilateurs d'extraction/à turbine pour fournir le flux d'air correspondant à l'unité de chauffage (10).

6. Unité de chauffage d'air selon la revendication 5, dans laquelle l'unité de chauffage (10) ne comporte que deux ventilateurs, un seul ventilateur pour entraîner de l'air provenant de l'extérieur (e) dans le générateur d'air chaud (12) à travers l'échangeur (13) du dispositif de récupération (11), et un seul ventilateur pour extraire de l'air de l'intérieur (i) des locaux et l'introduire dans le dispositif de récupération (11).

7. Unité de chauffage d'air selon la revendication 1, dans laquelle les moyens de commande de l'unité de chauffage (10) comprennent une unité de traitement et de commande qui reçoit des informations provenant de capteurs ambiants de l'intérieur (i) et de l'extérieur (e) des locaux auxquels l'unité est connectée, ainsi que des paramètres de fonctionnement programmés dans ladite unité et/ou de dispositifs externes distants, agissant automatiquement sur le fonctionnement :
- du système d'entrée d'air (111) dans le dispositif de récupération de chaleur (11) depuis l'intérieur (i) des locaux ;
- du système d'entrée d'air (121) dans le générateur d'air chaud (12), à travers l'échangeur du dispositif de récupération, pour son introduction ultérieure dans les locaux (i) ;
- du générateur d'air chaud ;
- de la position sélective ouverte ou fermée du système de connexion (113) pour l'entrée de gaz de combustion provenant du générateur d'air chaud (12) dans le conduit ou la chambre (112) d'entrée d'air depuis l'intérieur des locaux ;
- de la position sélective ouverte ou fermée du système de connexion (114) pour la recirculation de l'air dans les locaux (i) à partir du conduit ou de la chambre (112) d'entrée d'air vers le générateur d'air chaud (12).

8. Unité de chauffage d'air selon la revendication 1 ou 7, dans laquelle les moyens de commande agissent sur la position sélective ouverte ou fermée du système de connexion (113) pour l'entrée de gaz de combustion du générateur d'air chaud (12) dans le conduit ou à la chambre (112) d'entrée d'air depuis l'intérieur des locaux (i), permettant le passage de gaz de combustion dans le conduit ou la chambre (112), seulement si le système d'entrée d'air (111) dans le dispositif de récupération de chaleur (11) depuis l'intérieur (i) des locaux est activé, et la position sélective du système de connexion (114) pour la recirculation de l'air dans les locaux (i) depuis le conduit ou la chambre (112) d'entrée d'air dans le générateur d'air chaud (12) est fermée.

9. Unité de chauffage d'air selon l'une quelconque des revendications précédentes, dans laquelle le générateur d'air chaud (12) est connecté à plus d'un dispositif de récupération de chaleur (11) et/ou à plus d'un local à climatiser.

10. Unité de chauffage d'air selon l'une quelconque des revendications précédentes, dans laquelle le dispositif de récupération de chaleur (11) comprend un échangeur de chaleur à courants croisés (13).

11. Unité de chauffage d'air selon l'une quelconque des revendications précédentes, dans laquelle l'unité de chauffage (10) consiste en une unité compacte qui intègre sous une même enveloppe au moins un générateur d'air chaud (12) et un dispositif de récupération (11).

12. Générateur d'air chaud à combustion du type utilisé dans des unités de chauffage de l'air telles que celles décrites dans les revendications 1 à 11, pourvu d'un échangeur (122) destiné à chauffer de l'air provenant de l'extérieur (e) des locaux afin de l'introduire à l'intérieur (i) des locaux, et/ou à chauffer de l'air provenant de l'intérieur (i) des locaux afin de le faire recirculer à l'intérieur (i) des locaux, dans lequel le générateur d'air chaud (12) comprend au moins :
- un système d'entrée d'air (121) provenant de l'extérieur (e) dans le générateur d'air chaud (12) pour son entrée ultérieure à l'intérieur (i) des locaux, apte à être couplé au circuit d'air (116) de l'échangeur (13) du dispositif de récupération de chaleur (11) de l'air arrivant de l'extérieur (e) ;
- une sortie d'air du générateur d'air chaud (12) vers l'intérieur (i) des locaux ;
**caractérisé en ce que** le générateur d'air chaud (12) comprend :
- des moyens (114) de connexion de la recirculation d'air provenant de l'intérieur des locaux qui passe du conduit ou de la chambre (112) d'entrée d'air depuis l'intérieur (i) des locaux au générateur d'air chaud (12), avec ouverture ou fermeture sélective, pour la recirculation à l'intérieur (i) des locaux ;
- des moyens pour conduire et diriger des gaz d'échappement de combustion vers le dispositif de récupération de chaleur (11) par l'intermédiaire du système de connexion (113) pour l'entrée de gaz de combustion dans le conduit ou la chambre (112) d'entrée d'air depuis l'intérieur (i) des locaux, avec ouverture ou fermeture sélective pour permettre ou non le passage de gaz de combustion dans le conduit ou la chambre (112).

13. Générateur d'air chaud selon la revendication 12, dans lequel le générateur d'air chaud (12) comporte des moyens de connexion à deux ou plusieurs dispositifs de récupération de chaleur (11) et/ou à deux ou plusieurs locaux.
